# EUROPEAN PATENT APPLICATION

(11) **EP 0 779 460 A1**
(43) Date of publication of application: **18.06.1997**
(21) Application number: 96119472.7
(22) Date of filing: 04.12.1996
(51) Int. Cl.: F16K 41/02, F16J 15/22

(54) **Valve stem packing**

(30) Priority: 12.12.1995 CA 165001
(71) Applicant: Latty International S.A., 91400 Orsay Cedex (FR)
(72) Inventor: Latty, Cyril X., 92210 Saint Cloud (FR); Brou, Christian, 28160 Brou (FR)
(74) Representative: Eder, Eugen, Dipl.-Ing.

(57) **Abstract**

A packing material for high temperature, high pressure water and steam valves comprising a composite of carbon and metallic alloy fibres which have been spun into yarn, braided and moulded into a sealing ring.

## Description

### BACKGROUND OF THE INVENTION

This invention relates to a valve stem packing for high temperature, high pressure water and steam applications, particularly those found in a boiling water reactors ("BWR") and pressurized water reactors ("PWR") of nuclear power stations.

Shut-off valves are a critical component in the running of power stations where high temperatures and high pressure water or steam conditions are encountered. Proper valve stem sealing systems are therefore a critical component of shut-off valves. Many of the major accidents that have occurred at power stations are due to poor sealing systems. This leads to both health and environmental dangers as well as affecting the cost of power generation. For example, in the primary cooling circuit of a PWR and in the reactor auxiliary system, which carries demineralized borated water, there may be over 300 valves of various types the majority of which have packed glands. Gland leakage can give rise to encrustation of the valve with boron crystals which causes difficulty with respect to adjustment or repair and can lead to the deposit of irradiated liquid in the vicinity of the valve and may cause system pressure to drop, tripping safety measures and initiating an automatic shut-down. Repairs in a PWR are arduous and dangerous for the people involved, whose intake of rem may invalidate them from entering an irradiated area again for several months. Industry studies have shown that up to sixty percent of leaks at power stations are due to valve failures.

The ideal packing for valves provides leak free conditions for a very long period of time with little or no need for adjustment or attention during an operational cycle in order to restrict maintenance to pre-planned annual shutdown periods. The overall requirements of an ideal packing are that it should: (i) be correctly sized, flexible and comfortable for satisfactory installation; (ii) be volumetrically stable with no creep or tendency to extrude into clearance spaces; (iii) be strong, resilient and resistant to wear; (iv) have minimal friction and be non-abrasive; (v) be fully resistant to temperatures within the service temperature range required, and have good thermal conductivity to assist in dissipating heat from the gland; and (vi) for sealing purposes be of dense, leakproof construction, non-absorbent, chemically inert, non-contaminating and non-toxic.

The critical importance of valves has lead to a number of approaches for valve stem sealing systems requiring components used in the manufacture of the packing for stem valves to be of extremely high purity in combination with very effective anti-corrosion agents. For many years special asbestos based packings, such as those made with a mixed extruded yarn of asbestos and graphite have been used. These yarns have to date provided reliable sealing. There is, however, now a need for asbestos free sealing packings and thus packings currently used are made of carbonaceous yams which quickly deteriorate becoming brittle, inelastic, and lose their recovery and strength. This type of material presents an additional difficulty in that it is difficult to conform it into a ring as easily as asbestos can. Some other problems associated with the packings currently used include the need to modify the existing junk rings and lantern rings to custom fit configurations for each valve due to variation in the location of the leak-off points, and to maintain the close tolerances required to achieve performance standards. Additionally, impurities in composition (for example sulphur, chlorine, fluorine, bromine, iodine, etc.) can also be a problem with carbonaceous yams. To overcome the aforesaid problems the present solution has been to seal valves with expanded graphite rings and top and bottom rings of specially engineered and treated carbonaceous packing.

The present invention overcomes the disadvantages of the present solution by using a braided packing of mixed yarn of high resistance (HR) carbon fibre and inconel fibre, and also packing rings manufactured from the braided packing of mixed yarn. The set of rings thus provided has high heat, pressurized water, steam and pressure resistance together with excellent heat evacuation properties. The packing rings manufactured form the packing of the mixed yarn have very good elastic recovery and sealing efficiency even when they are not used with a live loading system typically used for loading valves such as those found in BWR and PWR systems (as described, for example, in published U.K. patent GB 2 271 163). Where a live loading system is used, the useful life of the packing yarn and sealing rings is enhanced, and also the safety of the system in which it is used is enhanced.

### SUMMARY OF THE INVENTION

The invention herein comprises a packing material for high temperature, high pressure water and steam valves comprising a composite of carbon and metallic alloy fibres spun into a yarn.

The invention also comprises a packing material for sealing high temperature, high pressure water and steam valves comprising a composite of carbon and metallic alloy filaments which have been spun into yarn and braided into a plait.

The invention still further comprises a packing material for high temperature high pressure water and steam valves comprising a composite of carbon and inconel filaments which have been stretched and cracked to form a homogeneous yarn, braided into a plait and moulded into a sealing ring, said yarn having between a range of 65-95% carbon and 5-35% inconel and said packing meeting high purity criteria, namely low sulphur, chlorine, fluorine, iodine and/or bromine content.

The invention still further comprises a packing material for high temperature high pressure water and steam valves comprising a composite of carbon and inconel filaments which have been stretched and cracked to form a homogeneous yarn, braided into a plait and moulded into a sealing ring, said yarn having between a range of 65-95% carbon and 5-35% inconel, wherein said yarn has been reinforced with a monel or inconel wire or continuous filament of between 0.05 mm to 0.2 mm diameter.

### DETAILED DESCRIPTION OF THE INVENTION

The packing yarn of the present invention is a combination of carbon fibres and very thin metallic fibres, such as stainless steel, inconel, monel, or other such alloys, which are homogenously blended together using known techniques, such as by stretching and cracking, and then spun into a homogeneous yarn which is both strong and elastic. The yarn is then braided on a braider such as one having 8-12-16-18-20-24-32-36-52 carriers, preferably interlocked, and collected as a plait.

Preferably the yarn is treated with high purity anti-corrosion agents and densifiers as required, such as zinc, phosphates, tungstates, and molybdates, which can be added in powdered form during the braiding operation. Instead of, or in addition to, treating the braided yarn with anti-corrosion agents, it is also possible to include zinc, as a corrosion inhibitor, in the form of a thin continuous wire which may be spirally wound the yarn, prior to braiding, or added on the carrier as a special yarn, or used as a core for the braided yarn. The yarn may also be treated with inorganic protection agents such as barium molybdate or barium tungstate. To provide greater strength to the plait of braided yarn a reinforcing wire or continuous filament may be braided into it. Such reinforcing wires or continuous filaments include inconel and monel wires or continuous filaments.

In use, a length of the plait of yarn which has been braided can be selected and formed into a sealing ring for fitting around the valve stem of a valve. The yarn of the present invention in the form of sealing rings is well suited for use in the valve stem stuffing boxes where there is no problem with radiation leakage, the doses being comparable to those where carbon is used. They provide excellent mechanical properties, good recovery, elasticity, side thrust with a good frictional coefficient enabling trouble free movement of the stem together with good thermal characteristics and resistance to steam is reached through a optimization of the various components of the yarn.

The preferred material of manufacture for producing a strong and smooth yarn is a high resistance (HR) carbon fibre with a low modulus, mixed with inconel or stainless steel fibres. Low modulus yarns are preferable since they have high resistance to flexing and crushing forces combined with good recovery. A mixture of 85% HR carbon and 15% inconel is preferred, although ranges of 65 - 95% HR carbon and 5 - 35% inconel or other alloys are acceptable. Additionally, mixes of spun yarns, as described above, can also be used with continuous carbon filaments.

While the invention has been described in conjunction with a specific embodiment thereof, it is evident that may alternatives, modifications and variations will be apparent to those skilled in the art in light of the foregoing description. Accordingly, it is intended to embrace all such alternatives, modifications and variations as fall within the spirit and broad scope of the invention.

## Claims

1. A packing material for high temperature, high pressure water and steam valves comprising a composite of carbon and metallic alloy fibres spun into a yarn.

2. A packing material according to claim 1 wherein the yarn is braided into a plait, a selected length of said plait which may be conformed or moulded into a valve seal.

3. A packing material according to claim 1 wherein the yarn is braided into a plait, a selected length of said plait which may be conformed or moulded into a valve seal to replace a conventional asbestos based packings.

4. A packing material for sealing high temperature, high pressure water and steam valves comprising a composite of carbon and metallic alloy fibres which have been spun into yarn and braided into a plait.

5. A packing material according to claim 4 wherein a length of the plait has been moulded into a sealing ring.

6. The packaging material according to claim 4 wherein the metallic alloy fibres are selected from the group comprising stainless steel, inconel or monel.

7. The packaging material according to claim 4 wherein the metallic alloy is inconel and the yarn has between a range of 65-95% carbon and 5-35% inconel.

8. The packing material according to claim 4 wherein the carbon is a high resistance carbon.

9. The packing material according to claim 4 wherein the fibres constituting the yarn have a cross-sectional diameter of between 8 and 16 microns.

10. The packing material according to claim 4 wherein the yarn is treated with an anti-corrosion agent.

11. The packing material according to claim 10 wherein the fibres constituting the yarn have an anti-corrosion agent which is selected from the group comprising zinc powder, phosphates, tungstates or molybdates.

12. The packing material according to claim 11 wherein the anti-corrosion agent is zinc and is present in the range of between 3% to 7% of the total weight of the yarn.

13. The packing material according to claim 4 further comprising a corrosion inhibitor.

14. The packing material of claim 13 wherein the corrosion inhibitor is zinc in the form of a thin continuous wine spirally wound around the yarn, prior to braiding.

15. The packing material of claim 13 wherein the corrosion inhibitor is zinc in the form of a special yarn braided into the plait.

16. The packing material of claim 13 wherein the corrosion inhibitor is zinc in the form of a wire core within the plait.

17. The packing material of claim 4 further comprising a reinforcing wire or continuous filament braided into plait.

18. A packing material according to claim 17 wherein said reinforcing wire or continuous filament is selected from the group comprising inconel and monel wires and continuous filaments.

19. The packing material according to claim 4 wherein said packing has a total sulphur content of less than 300 ppm.

20. The packing material according to claim 4 wherein said packing material has a total chlorine content of less than 80 ppm.

21. The packing material according to claim 4 wherein said packing material has a total fluorine content of less than 40 ppm.

22. The packing material according to claim 4 wherein said material has a total chlorine, fluorine, iodine and bromine content of less than 200 ppm.

23. The packing material according to claim 4 having a passive protection thanks to inorganic agents in the range of 2% to 3% of the total weight of the yarn.

24. The packing material according to claim 23 where the inorganic protection agents are selected from the group comprising barium molybdate or barium tungstate.

25. A packing material for high temperature high pressure water and steam valves comprising a composite of carbon and inconel filaments which have been stretched and cracked to form a homogeneous yarn, braided into a plait and moulded into a sealing ring, said yarn having between a range of 65-95% carbon and 5-35% inconel.

26. A packing material according to claim 25 wherein said yarn has been reinforced with a monel or inconel wire or continuous filament of between 0.05 mm to 0.2 mm diameter.

27. A method of sealing valves in high temperature high pressure water and steam valves consisting of the steps of selecting a length of the plait according to claim 4, moulding said plait into a ring to be used as a sealing ring to replace a conventional asbestos based packing.
